# EUROPÄISCHE PATENTSCHRIFT

(11) **EP 1 710 174 B1**
(45) Veröffentlichungstag und Bekanntmachung des Hinweises auf die Patenterteilung: **05.11.2008**
(21) Anmeldenummer: 05007302.2
(22) Anmeldetag: 04.04.2005
(51) Int. Cl.: B65G 1/137

(54) **Verfahren zum Kommissionieren von Artikeln**
Method for order picking of articles
Procédé pour pour rassembler et préparer des articles

(43) Veröffentlichungstag der Anmeldung: 11.10.2006
(73) Patentinhaber: Pierau Unternehmensberatung GmbH, 22391 Hamburg (DE)
(72) Erfinder: Lembke, Wulf, 22159 Hamburg (DE)
(74) Vertreter: Glawe, Delfs, Moll

(56) Entgegenhaltungen:
- EP-A- 1 452 462
- DE-A1- 10 340 143
- DE-U1- 29 723 878

## Beschreibung

Die Erfindung betrifft ein Verfahren zum Kommissionieren von Artikeln gemäß dem Oberbegriff des Anspruchs 1.

In Versandhäusern, bei Großhändlern und bei ähnlichen Organisationen, die verschiedenartige Artikel an ihre Abnehmer liefern, ist die Zahl der unterschiedlichen Artikel häufig sehr hoch und kann leicht einige Zehntausend oder noch viel mehr betragen. Es besteht dann das Problem, für Abnehmer die entsprechenden Artikel zusammenzusuchen und in einer Sendung oder Lieferung zusammenzustellen.

Das einfachste Verfahren wäre, mit einem Wagen durch die Lagerregale zu fahren und die Artikel für eine bestimmte Sendung zusammenzusuchen. Dies ist aber extrem unwirtschaftlich. Man ist daher versucht, für das sogenannte Kommissionieren dieser Artikel Vorrichtungen und Verfahren zu schaffen, mit denen die Artikel schneller zusammengestellt werden können bzw. dies mit weniger Personal möglich ist.

Dies kann z. B. dadurch geschehen, dass Personen, sog. Kommissionierer, auf ihrem Wagen gleichzeitig die Artikel für mehrere Sendungen zusammensuchen. Der von ihnen zurückzulegende Weg kann dadurch wesentlich verkürzt werden. Nimmt der Kommissionierer an einer Stelle der Lagerregale gleiche oder ähnliche Artikel für mehrere Sendungen mit, so muss er diesen Ort nicht mehrfach aufsuchen. Die so für mehrere Sendungen gesammelten Artikel werden dann in einen Sortierer eingegeben, und es werden die nach Sendungen sortierten Artikel manuell verpackt.

Bei einem anderen fortgeschrittenen System sind die Artikel zunächst in Kartons verpackt, die in einem Hochregal angeordnet sind. Wird ein solcher Artikel benötigt, so wird der entsprechende Karton aus dem Hochregallager in einen sogenannten Kommissionierer eingebracht, der ebenfalls ein Hochregallager ist, aber kleiner als das erstgenannte Hochregallager, in dem die Kartons zunächst angeordnet sind. Wird der Artikel dann tatsächlich benötigt, so wird der entsprechende Karton wiederum automatisch in ein Fach bewegt, so dass die Bedienungsperson den Karton erreichen, diesen öffnen und den Artikel entnehmen kann. Sind alle Fächer oder Plätze, die die Person bedienen kann, durch Kartons besetzt und wird ein Artikel aus einem anderen Karton benötigt, so wird ein im Moment nicht mehr benötigter Karton weiter nach oben befördert, und der jetzt benötigte Karton wird in das für die Bedienungsperson zugängliche Fach transportiert. Auf diese Weise ist es möglich, ungefähr 120 Teile pro Person und Stunde zu erreichen und in Auftragsbehälter unterzubringen und im Anschluss daran manuell zu verpacken.

Aus dem Stand der Technik gemäß dem Dokument DE-U-29 723 878 ist eine sogenannte Vorrichtung zum Kommissionieren bekannt.

Die Aufgabe der Erfindung besteht in der Schaffung eines Verfahrens, das unter Verwendung ähnlicher technischer Einrichtungen eine wesentlich schnellere Kommissionierung und Verpackung ermöglicht.

Die Erfindung verwendet dabei einen Kommissionierer bzw. das letztgenannte kleinere Hochregallager bestehend aus einer Regalzeile mit Regalbediengerät. Die erfindungsgemäße Lösung besteht darin, dass sie die Schritte aufweist:
a) es werden auf einem oder mehreren Wagen von jeweils einem Kommissionierer in K darauf angeordneten Behältern für N Sendungen M Artikel A eingelegt, an denen vorher sie identifizierende Etiketten (Barcode oder Transponder) angebracht sind, wobei jeweils festgelegt ist, in welchen der Behälter der Artikel einzulegen ist;
b) die Behälter werden in einem Hochregal zwischengelagert, das eine Pufferstrecke aufweist;
c) es werden alle Behälter, die Artikel für eine vorgegebene Sendung enthalten, in die Pufferstrecke eingestellt;
d) es werden in der Nähe der Pufferstrecke Kartons für alle Sendungen bereitgestellt oder, falls schon vorhanden, bereitgehalten, für die sich Artikel im ersten Behälter in der Pufferstrecke befinden;
e) die Artikel des ersten Behälters in der Pufferstrecke werden in die Kartons für die betreffenden Sendungen verteilt;
f) falls einer oder mehrere Kartons alle Artikel einer vorgegebenen Sendung enthalten, werden sie abgeführt und verschlossen;
g) sobald der erste Behälter geleert ist, wird er abgeführt;
h) falls kein weiterer Behälter in der Pufferstrecke vorhanden ist, wird mit Schritt c) fortgefahren, andernfalls wird der zweite Behälter in der Pufferstrecke erster Behälter;
i) es wird geprüft, ob alle Behälter, die Artikel enthalten, die zu Sendungen gehören, von denen es Artikel im ersten Behälter gibt, in der Pufferstrecke angeordnet sind;
j) falls dies nicht der Fall ist, werden die betreffenden Behälter in die Pufferstrecke eingestellt;
k) es wird mit Schritt d) fortgefahren.

Es findet bei dem Verfahren eine doppelte Sortierung statt, was zunächst wiedersinnig erscheint. Erstaunlicherweise ist es dadurch aber möglich, den Kommissionier- und Packvorgang wesentlich schneller und rationeller durchzuführen. So ist es mit dem erfindungsgemäßen Verfahren ohne weiteres möglich, statt der erwähnten 120 Teile pro Person und Stunde 450 Teile pro Stunde und Bedienungsperson zu kommissionieren und dabei gleichzeitig in einen Karton zu packen.

Bei dem erfindungsgemäßen Verfahren werden zunächst auf einen Wagen von jeweils einer Person in mehrere darauf angeordnete Behälter, insbesondere vier solcher Behälter Artikel für mehrere Sendungen eingelegt. Durch identifizierende Etiketten (Barcode oder Transponder), die dabei an den Artikeln angebracht werden, wird u. a. angegeben, für welche Sendung der Artikel bestimmt ist. Auch ist fest vorgegeben, in welche Behälter der Artikel einzulegen ist. Jeder der Behälter enthält also mehrere Artikel, die normalerweise für mehrere Sendungen bestimmt sind. Bei großen Lagern wird man dabei nicht nur mit einem Wagen Artikel kommissionieren, sondern gleichzeitig mit mehreren Wagen in verschiedenen Regalbereichen. Die Artikel für eine bestimmt Sendung sind daher nach Durchführen dieses Kommissioniervorgangs in möglicherweise mehreren Behältern angeordnet.

Nachdem dieser Kommissionierschritt durchgeführt ist, werden die Behälter in einem Hochregal zwischengelagert, das im wesentlichen dem erwähnten kleineren Hochregallager entspricht, und eine Behälter-Pufferstrecke aufweist.

In dieser Pufferstrecke werden dann alle Behälter eingestellt, die Artikel für eine vorgegebene Sendung enthalten. In der Nähe der Pufferstrecke werden Kartons für alle Sendungen bereitgestellt, für die sich Artikel im ersten Behälter in der Pufferstrecke befinden. Es besteht dann die Möglichkeit, die Artikel des ersten Behälters in der Pufferstrecke in die Kartons für die betreffenden Sendungen zu verteilen. Nachdem der erste Behälter so geleert worden ist, wird er abgeführt, um erneut verwendet zu werden. Falls einer oder mehrere Kartons alle Artikel einer vorgegeben Sendung enthalten, werden sie abgeführt und verschlossen. Der Vorgang wiederholt sich dann mit dem nächsten Behälter. Falls kein weiterer Behälter in der Pufferstrecke vorhanden ist, wird erneut eine Sendung bestimmt, die zunächst zusammengestellt werden soll. Es werden dann wieder alle Behälter, die Artikel für diese Sendung enthalten, in die Pufferstrecke eingestellt.

Ist andererseits in der Pufferstrecke noch ein weiterer Behälter, so wird dieser nunmehr zum ersten Behälter. Dieser enthält wieder Artikel für möglicherweise mehrere Sendungen. Es wird dann geprüft, ob für alle diese Sendungen Kartons bereitgestellt sind. Es werden weiter alle Behälter, die noch Artikel für diese Sendungen enthalten, in die Pufferstrecke eingestellt. Anschließend werden dann die Artikel des ersten Behälters wiederum in die Kartons verteilt.

Erstaunlicherweise ist das erfindungsgemäße Kommissionier- und Packverfahren, obwohl es zwei Sortierschritte erhält, wesentlich effizienter als das Kommissionierverfahren des Standes der Technik.

Bei einer vorteilhaften Ausführungsform wird der Kommissionierer durch Lichtzeichen bei der Auswahl der Artikel geführt, die er in die Behälter auf seinem Wagen einlegen muss.

Zweckmäßigerweise ist am Ende der Pufferstrecke in der Nähe des ersten Behälters ein Scanner vorgesehen, mit dem das Etikett gescannt wird, das an dem Artikel angebracht ist. Dadurch wird festgestellt, zu welcher Sendung der Artikel gehört. Es kann dann der Karton, indem der Artikel einzulegen ist, durch ein Lichtzeichen angezeigt werden.

Durch ein weiteres Lichtzeichen kann angezeigt werden, wenn der Karton wie vorgesehen alle Artikel der betreffenden Sendung enthält, also nicht mehr weiter befüllt werden muss. Er kann dann von einer Bedienungsperson entnommen und mit einem Förderer abtransportiert werden.

Zweckmäßigerweise werden die Behälter in das Regal und innerhalb des Regals automatisch befördert, wie dies in Verbindung mit dem Stand der Technik und dem kleineren Hochregallager erwähnt wurde.

Unterschiedliche Artikel oder unterschiedlicher Umfang einer Sendung erfordern häufig unterschiedliche Kartongröße. Zweckmäßigerweise wird daher vorgesehen, dass jeweils der Karton der richtigen Größe aufgrund von optischen Hinweisen von einer Person ausgewählt und durch Computerprogramm vorgegeben wird und in der Nähe der Pufferstrecke bereitgestellt wird.

Es ist möglich, die Regale oder Regalbereiche, die von einer Bedienungsperson bedient werden müssen, verhältnismäßig klein zu machen. Die Bedienungsperson braucht daher keine großen Wege zurückzulegen, was die Kommissioniergeschwindigkeit selbstverständlich erhöht.

Es ist auch ohne weiteres möglich, die Regale in mehreren Stockwerken anzuordnen, so dass von jedem Stockwerk (Zwischenbühne) eine Beschickung des Hochregals möglich wird.

Die Erfindung wird im folgenden anhand einer vorteilhaften Ausführungsform unter Bezugnahme auf die beigefügten Zeichnungen beschrieben. Es zeigen:
- Fig. 1: eine seitliche Ansicht eines Regals, das für das erfindungsgemäße Verfahren verwendet werden kann; und
- Fig. 2: eine Draufsicht auf das Regal der Fig. 1.

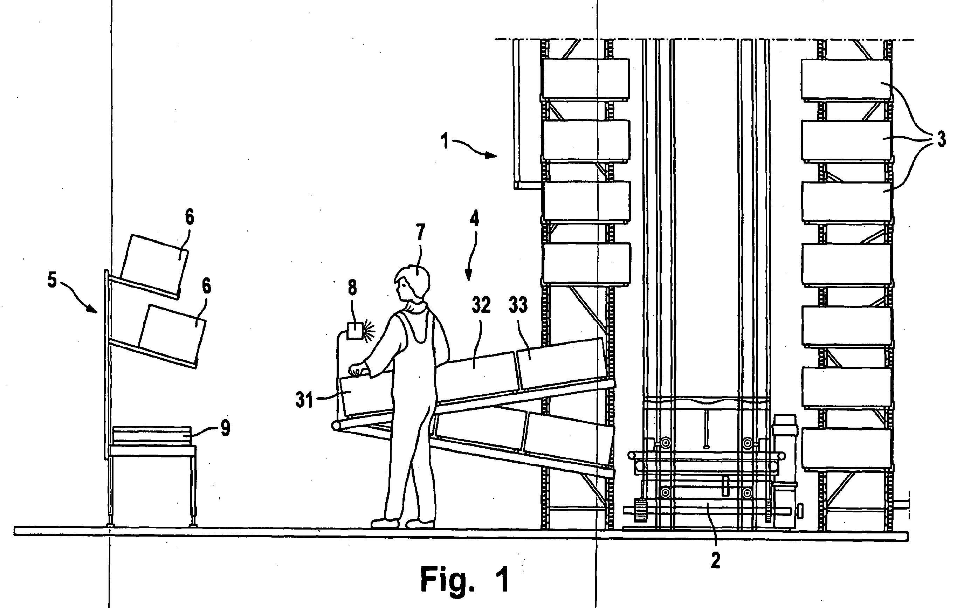

Das in Figur 1 gezeigte Regal weist eine Anzahl von Fächern auf, die in Regalzeilen angeordnet sind und in die mit einem an sich bekannten automatischen Regalbediengerät 2 die Behälter 3 eingesetzt sind, die vorher auf Wagen von Kommissionierern durch das Lager gefahren wurden und die mit den zu versenden Artikeln gefüllt sind, die dabei mit Etiketten versehen sind. Die Behälter 3, die Artikel einer vorgegebenen Sendung enthalten, werden in eine Pufferstrecke 4 eingestellt. Bei der Darstellung der Fig. 1 sind drei Behälter 31, 32, 33 in der Pufferstrecke 4 angeordnet, die Artikel für eine bestimmte Sendung enthalten. In einem entsprechenden Gestell 5 sind Kartons 6 angeordnet, die die Artikel für die einzelnen Sendungen aufnehmen sollen, die in Karton 31 enthalten sind. Diese Kartons wurden vorher auch unter Berücksichtigung ihrer erforderlichen Größe ausgesucht und in das Gestell 5 eingestellt. Die Bedienungsperson 7 entnimmt einzeln die Gegenstände, hält sie mit ihrem Etikett gegen einen Scanner 8, wodurch festgestellt werden kann, zu welcher Sendung der Artikel gehört. Eine in der Figur 1 nicht gezeigte Lampe leuchtet dann beim entsprechenden Karton 6 auf, so dass die Bedienungsperson 7 weiß, in welchem Karton 6 sie den Artikel einlegen muss. Ist ein Karton 6 vollständig mit allen Artikeln einer Sendung gefüllt, so wird dies ebenfalls durch ein Lichtzeichen angezeigt. Der Karton 6 kann dann auf einen Förderer 9 gestellt und abtransportiert werden, um verschlossen und ggf. weiter versendet zu werden. Der Behälter 31 wird dann zur Seite geschoben, so dass er auf einer schrägen Ebene zurück zum Regal transportiert werden kann, um dann von dem automatischen Regalbediengerät 2 wegtransportiert zu werden. Der bisherige zweite Behälter 32 rutscht nach und wird zum ersten Behälter 31, mit dem derselbe Vorgang wie oben durchgeführt wird.

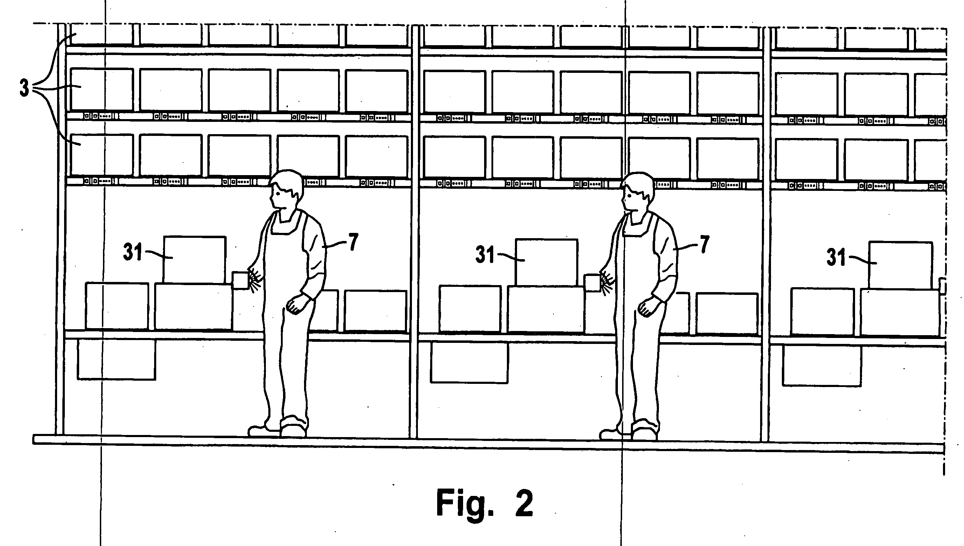

In Figur 2 ist die Draufsicht auf das Regal 1 gezeigt. Man sieht, dass mehrere Bedienungsperson 7 nebeneinander angeordnet sein können und keine großen Wege zurücklegen müssen, um die Kartons 6 mit den Artikeln für die einzelnen Sendungen zu befüllen.

## Patentansprüche

1. Verfahren zum Kommissionieren von Artikeln, das folgende Schritte aufweist:
a) es werden auf einem oder mehreren Wagen von jeweils einem Kommissionierer in K darauf angeordneten Behältern (3) für N Sendungen M Artikel (A) eingelegt, an denen vorher sie identifizierende Etiketten angebracht sind, wobei jeweils festgelegt ist, in welchen der Behälter (3) der Artikel einzulegen ist;
b) die Behälter (3) werden in einem Hochregal zwischengelagert, das eine Pufferstrecke (4) aufweist;
c) es werden alle Behälter (31, 32, 33), die Artikel für eine vorgegebene Sendung enthalten, in die Pufferstrecke (4) eingestellt; **gekennzeichnet durch** die schritte:
d) es werden in der Nähe der Pufferstrecke (4) Kartons (6) für alle Sendungen bereitgestellt oder, falls schon vorhanden, bereitgehalten, für die sich Artikel im ersten Behälter (31) in der Pufferstrecke (4) befinden;
e) die Artikel des ersten Behälters (31) in der Pufferstrecke (4) werden in die Kartons (6) für die betreffenden Sendungen verteilt;
f) falls einer oder mehrere Kartons (6) alle Artikel einer vorgegebenen Sendung enthalten, werden sie abgeführt und verschlossen;
g) sobald der erste Behälter (31) geleert ist, wird er abgeführt;
h) falls kein weiterer Behälter (32) in der Pufferstrecke (4) vorhanden ist, wird mit Schritt c) fortgefahren, andernfalls wird der zweite Behälter (32) in der Pufferstrecke erster Behälter;
i) es wird geprüft, ob alle Behälter (31, 32, 33), die Artikel enthalten, die zu Sendungen gehören, von denen es Artikel im ersten Behälter (31) gibt, in der Pufferstrecke (4) angeordnet sind;
j) falls dies nicht der Fall ist, werden die betreffenden Behälter (31, 32, 33) in die Pufferstrecke (4) eingestellt;
k) es wird mit Schritt d) fortgefahren.

2. Verfahren nach Anspruch 1, **dadurch gekennzeichnet, dass** der Kommissionierer durch Lichtzeichen bei der Auswahl der in die Behälter (3) einzulegenden Artikel geführt wird.

3. Verfahren nach Anspruch 1 oder 2, **dadurch gekennzeichnet, dass** am Ende der Pufferstrecke (4) in der Nähe des ersten Behälters (31) ein Scanner vorgesehen ist, mit dem das Etikett gescannt wird, und daraufhin der Karton (6), in den der Artikel einzulegen ist, durch ein Lichtzeichen angezeigt wird.

4. Verfahren nach einem der Ansprüche 1 bis 3, **dadurch gekennzeichnet, dass** durch ein Lichtzeichen angezeigt wird, wenn ein Karton (6) wie vorgesehen befüllt ist.

5. Verfahren nach einem der Ansprüche 1 bis 4, **dadurch gekennzeichnet, dass** die Behälter (3) in das Regal (1) und innerhalb des Regals automatisch befördert werden.

6. Verfahren nach einem der Ansprüche 1 bis 5, **dadurch gekennzeichnet, dass** jeweils der Karton (6) der richtigen Größe aufgrund von optischen Hinweisen von einer Person (7) ausgewählt und in der Nähe der Pufferstrecke (4) bereitgestellt wird.

7. Verfahren nach einem der Ansprüche 1 bis 6, **dadurch gekennzeichnet, dass** die befüllten Kartons (6) mit einem Förderer (9) abtransportiert werden.

8. Verfahren nach einem der Ansprüche 1 bis 7, **dadurch gekennzeichnet, dass** mehrere Regale (1) nebeneinander verwendet werden.

9. Verfahren nach einem der Ansprüche 1 bis 8, **dadurch gekennzeichnet, dass** die Regale von mehreren Stockwerken (Zwischenbühnen) aus mit Behältern (31) beschickt werden, auf welchen Zwischenbühnen sich die Lagerregale befinden, aus denen die Artikel der Sendungen mit Kommissionierwagen kommissioniert werden.

10. Verfahren nach einem der Ansprüche 1 bis 9, **dadurch gekennzeichnet, dass** identifizierende Etiketten mit Barcodes verwendet werden.

11. Verfahren nach einem der Ansprüche 1 bis 9, **dadurch gekennzeichnet, dass** identifizierende Etiketten mit Transpondern verwendet werden.

## Claims

1. Method of order-picking articles which comprises the following steps:
a) M articles (A), to which labels that identify them have been attached beforehand, are placed, on one or more carts of one picker in each case, in K containers (3) that are disposed thereon, it being defined, in each case, in which of said containers (3) the article is to be placed;
b) the containers (3) are subjected to intermediate storage in a high rack which has a buffer section (4);
c) all the containers (31, 32, 33) which contain articles for a given shipment are moved into the buffer section (4);
said method being **characterised by** the following steps:
d) cartons (6) for all the shipments for which articles are located in the first container (31) in the buffer section (4) are placed in readiness or, if already present, held in readiness, in the vicinity of the buffer section (4);
e) the articles in the first container (31) in the buffer section (4) are distributed into the cartons (6) for the relevant shipments;
f) if one or more cartons (6) contain all the articles for a given shipment, they are conducted away and sealed;
g) as soon as the first container (31) has been emptied, it is conducted away;
h) if no other container (32) is present in the buffer section (4), the method is proceeded with at step c); otherwise, the second container (32) in the buffer section (4) becomes the first container;
i) a check is carried out as to whether all the containers (31, 32, 33) which contain articles that belong to shipments of which there are articles in the first container (31) are disposed in the buffer section (4);
j) if this is not the case, the relevant containers (31, 32, 33) are moved into the buffer section (4);
k) the method is proceeded with at step d).

2. Method according to claim 1, **characterised in that** pickers are guided by means of light signals when selecting the articles to be placed in the containers (3).

3. Method according to claim 1 or 2, **characterised in that** a scanner, by means of which the label is scanned, is provided at the end of the buffer section (4) in the vicinity of the first container (31), and the carton (6) in which the article is to be placed is thereupon indicated by a light signal.

4. Method according to one of claims 1 to 3, **characterised in that** an indication is given, by means of a light signal, when a carton (6) has been filled as intended.

5. Method according to one of claims 1 to 4, **characterised in that** the containers (3) are conveyed automatically into the rack (1) and within the rack.

6. Method according to one of claims 1 to 5, **characterised in that** the carton (6) which is of the correct size, in each case, is selected by a person (7) on the basis of visual indications and is placed in readiness in the vicinity of the buffer section (4).

7. Method according to one of claims 1 to 6, **characterised in that** the cartons (6) which have been filled are transported away by means of a conveyer (9).

8. Method according to one of claims 1 to 7, **characterised in that** a number of racks (1) are used side by side.

9. Method according to one of claims 1 to 8, **characterised in that** the racks are loaded with containers (31) from a number of storeys (intermediate platforms), on which intermediate platforms the storage racks from which the articles of the shipments are order-picked by means of picking carts are located.

10. Method according to one of claims 1 to 9, **characterised in that** identifying labels with barcodes are used.

11. Method according to one of claims 1 to 9, **characterised in that** identifying labels with transponders are used.

## Revendications

1. Procédé pour la préparation de commandes d'articles qui présente les étapes suivantes :
a) sur un ou plusieurs chariots de respectivement un préparateur de commandes dans K récipients (3) disposés dessus, on introduit pour N envois M articles (A) sur lesquels sont placées des étiquettes qui les identifient, en spécifiant à chaque fois dans lequel des récipients (3) l'article doit être introduit ;
b) les récipients (3) sont stockés provisoirement dans un rayonnage haut qui présente un tronçon tampon (4) ;
c) tous les récipients (31, 32, 33), qui contiennent des articles pour un envoi prédéfini, sont placés dans le tronçon tampon (4), **caractérisé par** les étapes suivantes :
d) à proximité du tronçon tampon (4), on tient ou, s'il existe déjà, on met à disposition des cartons (6) pour tous les envois pour lequel des articles se trouvent dans le premier récipient (31) dans le tronçon tampon (4) ;
e) les articles du premier récipient (31) dans le tronçon tampon (4) sont répartis entre les cartons (6) pour les envois concernés ;
f) si un ou plusieurs cartons (6) contiennent tous les articles d'un envoi prédéfini, ils sont évacués et fermés ;
g) dès que le premier récipient (31) est vidé, il est évacué ;
h) si aucun autre récipient (32) n'est présent dans le tronçon tampon (4), on poursuit avec l'étape c), autrement, le second récipient (32) devient le premier récipient dans le tronçon tampon ;
i) on vérifie si tous les récipients (31, 32, 33) qui contiennent des articles appartenant à des envois dont il y a des articles dans le premier récipient (31), sont disposés dans le tronçon tampon (4) ;
j) si ce n'est pas le cas, les récipients (31, 32, 33) concernés sont mis en place dans le tronçon tampon (4) ;
k) on poursuit avec l'étape d).

2. Procédé selon la revendication 1, **caractérisé en ce que** le préparateur de commandes est guidé par des signaux lumineux dans le choix des articles à mettre en place dans les récipients (3).

3. Procédé selon la revendication 1 ou 2, **caractérisé en ce que,** à la fin du tronçon tampon (4) et à proximité du premier récipient (31), il est prévu un scanner qui scanne l'étiquette, et ensuite le carton (6), dans lequel l'article doit être mis en place, est indiqué par un signal lumineux.

4. Procédé selon l'une quelconque des revendications 1 à 3, **caractérisé en ce que**, par un signal lumineux, on indique qu'un carton (6) est rempli comme prévu.

5. Procédé selon l'une quelconque des revendications 1 à 4, **caractérisé en ce que** les récipients (3) sont transportés automatiquement dans le rayonnage (1) et à l'intérieur du rayonnage.

6. Procédé selon l'une quelconque des revendications 1 à 5, **caractérisé en ce qu'**à chaque fois le carton (6) de la grandeur correcte est choisi par une personne (7) sur la base d'informations optiques et est mise à disposition à proximité du tronçon tampon (4).

7. Procédé selon l'une quelconque des revendications 1 à 6, **caractérisé en ce que** les cartons (6) remplis sont transportés avec un transporteur (9).

8. Procédé selon l'une quelconque des revendications 1 à 7, **caractérisé en ce que** plusieurs rayonnages (1) sont utilisés les uns à côté des autres.

9. Procédé selon l'une quelconque des revendications 1 à 8, **caractérisé en ce que** les rayonnages sont alimentés à partir de plusieurs étages (plates-formes intermédiaires) avec des récipients (31), plates-formes sur lesquelles se trouvent les rayonnages de palier à partir desquels les articles des envois sont préparés avec des chariots de préparation de commandes.

10. Procédé selon l'une quelconque des revendications 1 à 9, **caractérisé en ce que** des étiquettes d'identification à codes-barres sont utilisées.

11. Procédé selon l'une quelconque des revendications 1 à 9, **caractérisé en ce que** des étiquettes d'identification avec des transpondeurs sont utilisées.
